# EUROPÄISCHE PATENTSCHRIFT

(11) **EP 2 204 635 B1**
(45) Veröffentlichungstag und Bekanntmachung des Hinweises auf die Patenterteilung: **20.04.2016**
(21) Anmeldenummer: 08022529.5
(22) Anmeldetag: 30.12.2008
(51) Int. Cl.: G01B 11/275

(54) **Verfahren, Steuerungsprogramm und System zur Ermittlung zumindest einer Fahrwerkskenngröße eines lenkbaren Fahrzeugs**
Method, control program and system for determining at least one parameter of the chassis of a steerable vehicle
Procédé, programme de commande et système de détermination d'au moins une grandeur caractéristique de châssis d'un véhicule dirigeable

(43) Veröffentlichungstag der Anmeldung: 07.07.2010
(73) Patentinhaber: Siemens Aktiengesellschaft, 80333 München (DE)
(72) Erfinder: Jodoin, Thomas, 91126 Schwabach (DE); Pförtner, Andreas, Dr., 90587 Veitsbronn (DE); Simon, Frank, 91052 Erlangen (DE)

(56) Entgegenhaltungen:
- WO-A-2006/130694
- US-A- 4 823 470
- US-A1- 2007 283 582
- US-A1- 2008 119 978

## Beschreibung

Eine Fahrwerkseinstellung eines Kraftfahrzeugs wird üblicherweise durch Kenngrößen wie Sturz und Spur bestimmt. Für gelenkte Achsen sind zusätzlich Nachlauf und Spreizung von Interesse. Unter Spur wird eine Abstandsdifferenz, um welche zwei Räder einer Vorderachse näher zusammenstehen als zwei Räder einer Hinterachse. Stehen die Räder der Vorderachse näher zusammen als die Räder der Hinterachse, so wird dies als positive Spur oder Vorspur bezeichnet, andernfalls als negative Spur oder Nachspur. Sturz beschreibt einen Winkel zwischen einer Radebene und einer Senkrechten, die in einem Aufstandspunkt eines Rades quer zur Fahrzeuglängsachse gebildet ist.

Ein Nachlauf entsteht durch Schrägstellen einer Lenkdrehachse bzw. eines Achsschenkelbolzens in Richtung Fahrzeuglängsachse gegenüber einer Senkrechten zur Fahrbahn. Dagegen entsteht eine Spreizung durch Schrägstellen der Lenkdrehachse bzw. des Achsschenkelbolzens in Richtung Fahrzeugquerachse gegenüber einer Senkrechten zur Fahrbahn. Insbesondere Nachlauf ist eine wichtige Kenngröße einer Fahrwerkseinstellung, die maßgeblich für Geradeauslauf und Spurtreue eines Fahrzeugs ist.

Während Sturz und Spur direkt am Fahrzeug gemessen werden können, werden Nachlauf und Spreizung aus Spur- und Sturzmeßwerten für mehrere Lenkeinschläge anhand von Berechnungsformeln abgeleitet. Bereits die Spur- und Sturzmeßwerte unterliegen nicht vernachlässigbaren Ungenauigkeiten. Aufgrund einer Fehlerfortpflanzung bei einer Ableitung von Nachlauf und Spreizung aus den Spur- und Sturzmeßwerten sind auf diese Weise ermittelte Werte für Nachlauf und Spreizung derart ungenau, daß sie für praktische Anwendungen unbrauchbar sind.

Aus EP 1 739 390 A1 ist ein Verfahren zur Ermittlung des Nachlaufs bei lenkbaren Achsen bekannt, bei dem mittels eines Meßsystems mehr als zwei Sturz/Spur-Wertepaare gemessen werden. Hieraus wird mittels eines Rechners eine Sturz/Spur-Kurve ermittelt. Der Nachlauf wird aus Koordinaten von zwei Punkten der Sturz/SpurKurve berechnet.

Bei Meßverfahren, die auf einer Verfolgung einer Bewegung eines Radmittelpunkts während eines Lenkeinschlags basieren, ist problematisch, daß das Fahrzeug beim Lenkeinschlag angehoben wird. Dies führt dazu, daß auch der Radmittelpunkt angehoben wird. Hierdurch wird eine Berechnung von Nachlauf und Spreizung verfälscht.

Weitere Verfahren zur Messung der Fahrwerksgeometrie sind aus US 2008/119978 A1, US4823470A,WO 2006/130694 A und US 2007/283582 A1 bekannt.

Der vorliegenden Erfindung liegt die Aufgabe zugrunde, ein Verfahren zur Ermittlung von Fahrwerkskenngrößen eines Kraftfahrzeuges anzugeben, das eine für praktische Anwendungen hinreichend genaue Ermittlung von Nachlauf und Spreizung ermöglicht.

Diese Aufgabe wird erfindungsgemäß durch ein Verfahren mit den in Anspruch 1 angegebenen Merkmalen und durch ein Steuerungsprogramm mit den in Anspruch 5 angegebenen Merkmalen gelöst. Vorteilhafte Weiterbildungen der vorliegenden Erfindung sind in den abhängigen Ansprüchen angegeben.

Die Erfindung wird nachfolgend an einem Ausführungsbeispiel anhand der Zeichnung näher erläutert. Es zeigt
- Figur 1: ein Ablaufdiagramm für ein Verfahren zur Ermittlung von Fahrwerkskenngrößen eines Kraftfahrzeuges,
- Figur 2: eine schematische Darstellung eines Systems zur Ermittlung von Fahrwerkskenngrößen eines Kraftfahrzeuges,
- Figur 3: eine schematische Darstellung eines Rades mit Rotationsachse und Lenkachse und eines Normalenvektors senkrecht zu einer Radebene,
- Figur 4: eine schematische Darstellung zur Veranschaulichung eines Nachlaufwinkels,
- Figur 5: eine schematische Darstellung zur Veranschaulichung eines Nachlaufwinkels,
- Figur 6: eine schematische Darstellung eines Verlaufs eines Normalenvektors während eines Lenkeinschlags.

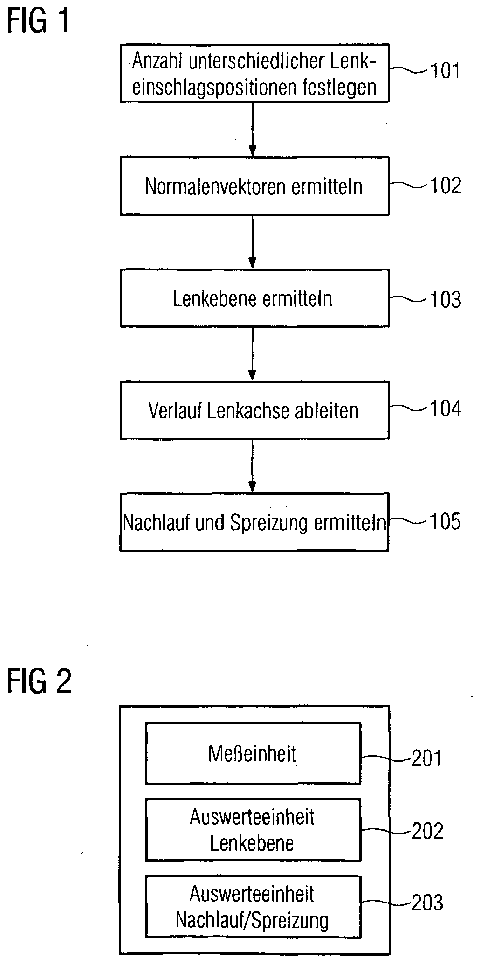

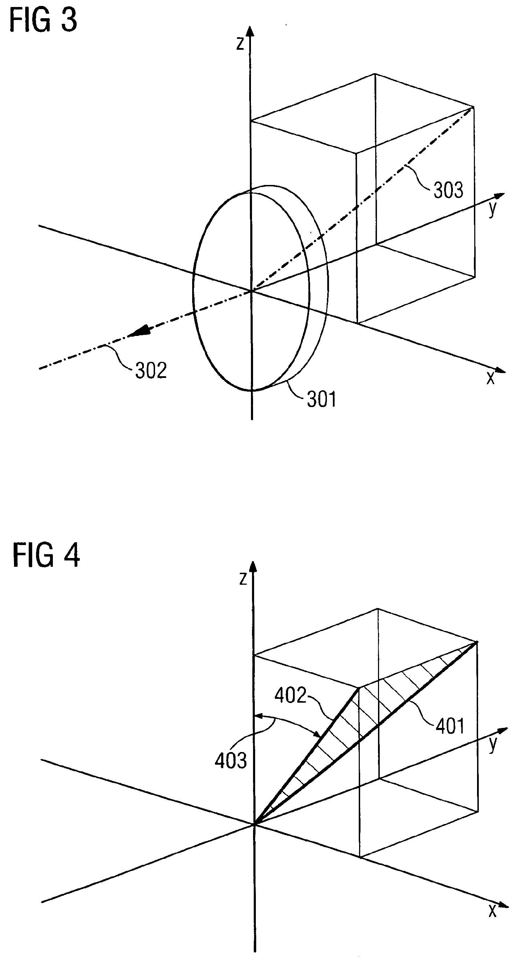

Entsprechend dem in Figur 1 dargestellten Ablaufdiagramm wird zur Ermittlung von Fahrwerkskenngrößen eines lenkbaren Fahrzeugs zunächst eine Anzahl unterschiedlicher Lenkpositionen zur Messung festgelegt (Schritt 101). Für die unterschiedlichen Lenkpositionen werden durch eine Meßeinheit 201 des in Figur 2 dargestellten Systems Normalenvektoren ermittelt (Schritt 102). Der jeweilige Normalenvektor ist senkrecht zur Radebene eines in Figur 3 in einem Koordinatensystem dargestellten Rades 301 mit einer Rotationsachse 302 und einer Lenkachse 303.

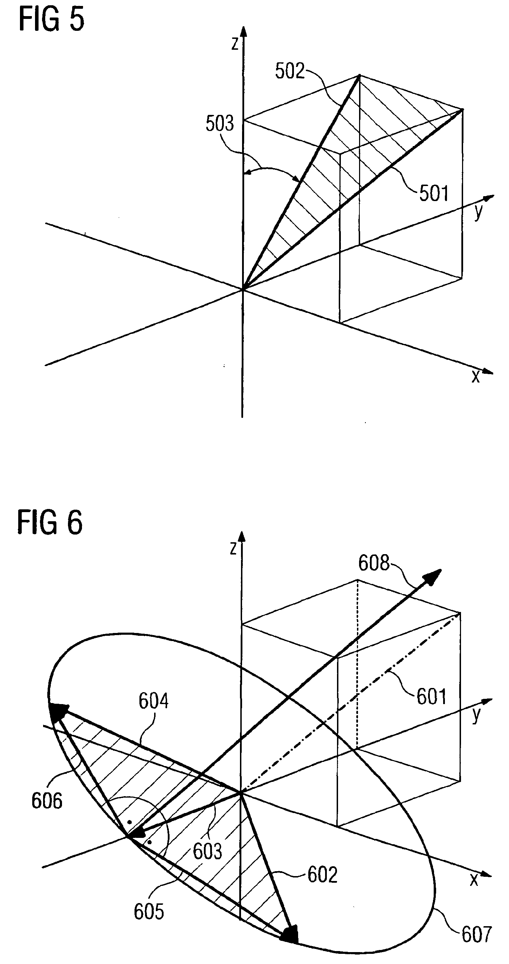

Anhand von Figur 6 ist veranschaulicht, daß während eines Lenkeinschlags ermittelte Normalenvektoren 602-604 einen Kreisbogen bzw. Kreis 607 um die Lenkachse 601 beschreiben, dessen Fläche senkrecht zur Lenkachse 601 ist. Auf dieser Grundlage wird durch eine erste Auswerteeinheit 202 des in Figur 2 dargestellten Systems anhand des für mehrere unterschiedliche Lenkeinschlagspositionen ermittelten Normalenvektors eine zum Kreis 607 um die Lenkachse 601 parallele Lenkebene ermittelt (Schritt 103). Aus der ermittelten Lenkebene kann dann ein Verlauf der Lenkachse 601 abgeleitet werden (Schritt 104).

Entsprechend der Darstellung in Figur 6 werden Normalenvektoren 602-604 für 3 unterschiedliche Lenkeinschlagspositionen ermittelt. Zu diesen Normalenvektoren 602-604 werden vorteilhafterweise zwei Differenzvektoren 605, 606 ermittelt, aus denen ein Vektorprodukt 608 berechnet wird, das senkrecht zu den Differenzvektoren 605, 606 ist. Das Vektorprodukt 608 ist wiederum senkrecht zur Lenkebene und parallel zur Lenkachse 601, so daß Lenkebene bzw. Lenkachse 601 auf einfache Weise aus dem Vektorprodukt abgeleitet werden können.

Nachlauf 403 und Spreizung 503 entsprechend der Darstellungen in Figur 4 und 5 werden durch eine zweite Auswerteeinheit 203 als Winkel zwischen einer Projektion 402, 502 der Lenkachse 401, 501 auf eine xz-Ebene (Nachlauf) bzw. auf eine yz-Ebene (Spreizung) und einer z-Achse als Bezugsachse ermittelt (Schritt 105). Die Bezugsachse ist dabei senkrecht zu einer normierten Grundebene, die beispielsweise parallel zu einer sich horizontal erstreckenden Bodenfläche verlaufen kann. Die xz-Ebene ist üblicherweise parallel zu einer Längsachse eines Fahrzeugs und senkrecht zur normierten Grundebene, während die yz-Ebene parallel zu einer Querachse des Fahrzeugs und senkrecht zur normierten Grundebene verläuft.

Das vorangehend beschriebene Verfahren wird bevorzugt durch ein Steuerungsprogramm implementiert, das auf einem rechnerbasierten Steuerungssystem ablauffähig ist, und bei dessen Ausführung die vorangehend beschriebenen Schritte ausgeführt bzw. veranlaßt werden. Des weiteren können die erste und zweite Auswerteeinheit 202, 203 des in Figur 2 dargestellten Systems auch zu einer Einheit zusammengefaßt sein.

Zur Erhöhung einer Reproduzierbarkeit von berechneten Nachlauf- und Spreizungswerten kann beispielsweise n mal per Zufallsprinzip jeweils ein Normalenvektor pro Meßwinkel selektiert werden. Pro Meßwinkel können beispielsweise 50 Normalenvektoren erfaßt werden, und es können 1000 mal per Zufallsprinzip 3 Normalenvektoren selektiert werden. Für diese jeweils 3 per Zufallsprinzip selektierten Normalenvektoren wird analog zu obigen Ausführungen jeweils ein Vektorprodukt berechnet, das parallel zur Lenkachse ist. Aus n ermittelten Vektorprodukten kann zur Eliminierung von Meßfehlern ein Mittelwert oder ein Median gebildet werden, z.B. koordinatenweise nach x-, y-, und z-Komponenten getrennt. Auf diese Weise ergibt sich ein äußerst robustes Meßverfahren.

Ein besonderer Vorteil des hier beschriebenen Verfahren besteht darin, daß bisherige Verfahren, über Auswertung eines Radmittelpunkts Nachlauf und Spreizung zu ermitteln, wenig brauchbar waren, da einem Lenkeinschlag üblicherweise auch ein Anheben eines Fahrzeugs erfolgt. Durch das Anheben werden Meßwerte, die auf eine Erfassung des Radmittelpunkts abzielen signifikant verfälscht. Diese Probleme werden durch das hier beschriebene Verfahren umgangen.

Die Anwendung der vorliegenden Erfindung ist nicht auf das beschriebene Ausführungsbeispiel beschränkt. Dabei ist für die Erfindung nur die Definition der unabhängigen Ansprüche als einschränked anzusehen.

## Patentansprüche

1. Verfahren zur Ermittlung zumindest einer Fahrwerkskenngröße eines lenkbaren Fahrzeugs, bei dem
- ein Normalenvektor (602-604) senkrecht zu einer Radebene, durch den während eines Lenkeinschlags ein Kreisbogen (607) um eine Lenkachse (601) beschreibbar ist, für mehrere unterschiedliche Lenkeinschlagspositionen ermittelt wird,
- anhand des für mehrere unterschiedliche Lenkeinschlagspositionen ermittelten Normalenvektors (602-604) eine zum Kreisbogen um die Lenkachse (601) parallele Lenkebene ermittelt wird,
- ein Verlauf der Lenkachse (601) aus der ermittelten Lenkebene ableitbar ist,
- Nachlauf (403) als Winkel zwischen einer Projektion (402) der Lenkachse (601) auf eine vorgebbare erste Ebene und einer Bezugsachse und/oder Spreizung (503) als Winkel zwisehen einer Projektion (502) der Lenkachse (601) auf eine vorgebbare zweite Ebene und der Bezugsachse ermittelt werden, wobei die Bezugsachse senkrecht zu einer normierten Grundebene ist, und wobei die erste Ebene parallel zu einer Längsachse eines Fahrzeugs und senkrecht zur normierten Grundebene ist, und wobei die zweite Ebene parallel zu einer Querachse des Fahrzeugs und senkrecht zur normierten Grundebene verläuft,
**dadurch gekennzeichnet, daß**
- zur Ermittlung des Normalenvektors (602-604) für die unterschiedlichen Lenkpositionen jeweils eine vorgebbare Anzahl von Normalenvektormeßwerten erfaßt wird,
- für jeweils drei per Zufallsprinzip selektierte Normalenvektormeßwerte (602-604) zwei Differenzvektoren ermittelt (605, 606) werden,
- aus den Differenzvektoren (605, 606) jeweils ein Vektorprodukt (608) berechnet wird,
- aus dem Vektorprodukt (608) die Lenkebene und/oder die Lenkachse (601) abgeleitet werden, wobei das Vektorprodukt (608) senkrecht zur Lenkebene ist,
- aus den ermittelten Vektorprodukten (608) zur Eliminierung von Meßfehlern ein Mittelwert oder ein Median gebildet wird.

2. Verfahren nach Anspruch 1,
bei dem der Nachlauf als Winkel zwischen der Bezugsachse und der Projektion der Lenkachse auf der ersten Ebene ermittelt wird, die parallel zur Längsachse des Fahrzeugs und senkrecht zur normierten Grundebene verläuft.

3. Verfahren nach einem der Ansprüche 1 oder 2,
bei dem die Spreizung als Winkel zwischen der Bezugsachse und der Projektion der Lenkachse auf der zweiten Ebene ermittelt wird, die parallel zur Querachse des Fahrzeugs und senkrecht zur normierten Grundebene verläuft.

4. Verfahren nach einem der Ansprüche 2 oder 3,
bei dem die normierte Grundebene parallel zu einer sich horizontal erstreckenden Bodenfläche ist.

5. Verfahren nach einem der Ansprüche 1 bis 4,
bei dem die Radebene senkrecht zu einer Rotationsachse eines durch einen Lenkeinschlag um die Lenkachse schwenkbaren Rads ist, und bei dem die Lenkachse senkrecht zur Lenkebene ist.

6. Verfahren nach Anspruch 1,
bei dem für die unterschiedlichen Lenkpositionen jeweils 45-55 Normalenvektormeßwerte erfaßt werden.

7. Steuerungsprogramm zur Ermittlung zumindest einer Fahrwerkskenngröße eines lenkbaren Fahrzeugs, das in einen Arbeitsspeicher eines Rechners ladbar ist und zumindest einen Codeabschnitt aufweist, bei dessen Ausführung
- eine Ermittlung eines Normalenvektors (602-604) senkrecht zu einer Radebene, durch den während eines Lenkeinschlags ein Kreisbogen (607) um eine Lenkachse (601) beschreibbar ist, für mehrere unterschiedliche Lenkeinschlagspositionen veranlaßt wird,
- eine Ermittlung einer zum Kreisbogen um die Lenkachse (601) parallelen Lenkebene anhand des für mehrere unterschiedliche Lenkeinschlagspositionen ermittelten Normalenvektors (602-604) veranlaßt wird, wobei ein Verlauf der Lenkachse (601) aus der Lenkebene ableitbar ist,
- eine Ermittlung von Nachlauf (403) als Winkel zwischen einer Projektion (402) der Lenkachse (601) auf eine vorgebbare erste Ebene und einer Bezugsachse und/oder Spreizung (503) als winkel zwischen einer Projektion (502) der Lenkachse (601) auf eine vorgebbare zweite Ebene und der Bezugsachse veranlaßt wird, wobei die Bezugsachse senkrecht zu einer normierten Grundebene ist, und wobei die erste Ebene parallel zu einer Längsachse eines Fahrzeugs und senkrecht zur normierten Grundebene ist, und wobei die zweite Ebene parallel zu einer Querachse des Fahrzeugs und senkrecht zur normierten Grundebene verläuft,
- zur Ermittlung des Normalenvektors (602-604) für die unterschiedlichen Lenkpositionen jeweils eine vorgebbare Anzahl von Normalenvektormeßwerten erfaßt wird,
- für jeweils drei per Zufallsprinzip selektierte Normalenvektormeßwerte (602-604) zwei Differenzvektoren (605,606) ermittelt werden,
- aus den Differenzvektoren (605,606) jeweils ein Vektorprodukt (608) berechnet wird,
- aus dem Vektorprodukt (608) die Lenkebene und/oder die Lenkachse (601) ermittelt werden, wobei das Vektorprodukt (608) senkrecht zur Lenkebene ist,
- aus den ermittelten Vektorprodukten zur Eliminierung von Meßfehlern ein Mittelwert oder ein Median gebildet wird,
wenn das Steuerungsprogramm auf dem Rechner abläuft.

## Claims

1. Method for determining at least one parameter of the chassis of a steerable vehicle, in which
- a normal vector (602-604) is determined perpendicularly to a wheel plane through which an arc (607) can be described about a steering axis (601) during a steering lock, for a plurality of different steering lock positions,
- a steering plane which is parallel to the arc about the steering axis (601) is determined on the basis of the normal vector (602-604) which is determined for a plurality of different steering lock positions,
- a profile of the steering axis (601) can be derived on the basis of the determined steering plane,
- caster (403) is determined as an angle between a projection (402) of the steering axis (601) onto a predefinable first plane and a reference axis and/or the king pin inclination (503) is determined as an angle between a projection (502) of the steering axis (601) onto a predefinable second plane and the reference axis, wherein the reference axis is perpendicular to a standardized basic plane, and wherein the first plane is parallel to a longitudinal axis of a vehicle and perpendicular to the standardized basic plane, and wherein the second plane runs parallel to a transverse axis of the vehicle and perpendicular to the standardized basic plane,
**characterized in that**
- a predefinable number of normal vector measured values is obtained in each case in order to determine the normal vector (602-604) for the different steering positions,
- two difference vectors (605, 606) are determined for, in each case, three normal vector measured values (602-604) which are selected by a random principle,
- in each case a vector product (608) is calculated on the basis of the difference vectors (605, 606),
- the steering plane and/or the steering axis (601) are/is derived on the basis of the vector product (608), wherein the vector product (608) is perpendicular to the steering plane, and
- a mean value or a median is formed on the basis of the determined vector products (608) in order to eliminate measuring errors.

2. Method according to Claim 1,
in which the caster is determined as an angle between the reference axis and the projection of the steering axis onto the first plane which runs parallel to the longitudinal axis of the vehicle and perpendicular to the standardized basic plane.

3. Method according to one of Claims 1 or 2,
in which the king pin inclination is determined as an angle between the reference axis and the projection of the steering axis onto the second plane which runs parallel to the transverse axis of the vehicle and perpendicular to the standardized basic plane.

4. Method according to one of Claims 2 or 3,
in which the standardized basic plane is parallel to a horizontally extending ground surface.

5. Method according to one of Claims 1 to 4,
in which the wheel plane is perpendicular to a rotational axis of a wheel which can be pivoted about the steering axis by means of a steering lock, and in which the steering axis is perpendicular to the steering plane.

6. Method according to Claim 1,
in which in each case 45-55 normal vector measured values are obtained for the different steering positions.

7. Control program for determining at least one parameter of the chassis of a steerable vehicle, which program can be loaded into a main memory of a computer and has at least one code section, during the execution of which
- the determination of a normal vector (602-604) perpendicular to a wheel plane, by means of which vector an arc (607) can be described about a steering axis (601) during a steering lock, is brought about for a plurality of different steering lock positions,
- the determination of a steering plane parallel to the arc about the steering axis (601) on the basis of the normal vector (602-604) which is determined for a plurality of different steering lock positions is brought about, wherein a profile of the steering axis (601) can be derived on the basis of the steering plane,
- the determination of the caster (403) is brought about as an angle between a projection (402) of the steering axis (601) onto a predefinable first plane and a reference axis and/or king pin inclination (503) is brought about as an angle between a projection (502) of the steering axis (601) onto a predefinable second plane and the reference axis, wherein the reference axis is perpendicular to a standardized basic plane, and wherein the first plane is parallel to a longitudinal axis of a vehicle and perpendicular to the standardized basic plane, and wherein the second plane runs parallel to a transverse axis of the vehicle and perpendicular to the standardized basic plane,
- in each case a predefinable number of normal measured vector measured values is obtained in order to determine the normal vector (602-604) for the different steering positions,
- two difference vectors (605, 606) are determined for, in each case, three normal vector measured values (602-604) which are selected by a random principle,
- in each case a vector product (608) is calculated on the basis of the difference vectors (605, 606),
- the steering plane and/or the steering axis (601) are/is determined on the basis of the vector product (608), wherein the vector product (608) is perpendicular to the steering plane, and
- a mean value or a median is formed on the basis of the determined vector products in order to eliminate measuring errors
if the control program is running on the computer.

## Revendications

1. Procédé de détermination d'au moins une grandeur caractéristique de châssis d'un véhicule dirigeable, dans lequel
- on détermine un vecteur (602 à 604) normal perpendiculaire à un plan de roue par lequel, pendant un braquage, un arc (607) de cercle autour d'un essieu (601) directeur peut être décrit pour plusieurs positions de braquage différentes,
- à l'aide du vecteur (602 à 604) normal déterminé pour plusieurs positions de braquage différentes, on détermine un plan de direction parallèle à l'arc de cercle autour de l'essieu (601) directeur,
- une course de l'essieu (601) directeur peut être déduite du plan de direction déterminé,
- on détermine un déport (403) sous la forme d'un angle entre une projection (402) de l'essieu (601) directeur sur un premier plan pouvant être prescrit et un axe de référence et/ou un écartement (503) sous la forme d'un angle entre une projection (502) de l'essieu (601) directeur sur un deuxième plan pouvant être prescrit et l'axe de référence, l'axe de référence étant perpendiculairement à un plan de base normé et dans lequel le premier plan est parallèle à un axe longitudinal d'un véhicule et perpendiculaire au plan de base normé, et dans lequel le deuxième plan s'étend parallèlement à un axe transversal du véhicule et perpendiculairement au plan de base normé,
**caractérisé en ce que**
- pour la détermination du vecteur (602 à 604) normal des positions de direction différentes, on relève respectivement un nombre pouvant être donné à l'avance de valeurs de mesure du vecteur normal,
- pour respectivement trois valeurs (602 à 604) du vecteur normal sélectionnées par principe aléatoire, on détermine (605, 606) deux vecteurs de différence,
- à partir des vecteurs (605, 606) de différence, on calcule respectivement un produit (608) vectoriel,
- à partir du produit (608) vectoriel, on déduit le plan de direction et/ou l'essieu (601) directeur, le produit (608) vectoriel étant perpendiculaire au plan de direction,
- à partir des produits (608) vectoriels déterminés, on forme une valeur moyenne ou une médiane pour éliminer des erreurs de mesure.

2. Procédé suivant la revendication 1,
dans lequel on détermine le déport sous la forme d'un angle entre l'axe de référence et la projection de l'essieu directeur sur le premier plan, qui s'étend parallèlement à l'axe longitudinal du véhicule et perpendiculairement au plan de base normé.

3. Procédé suivant l'une des revendications 1 ou 2,
dans lequel on détermine l'écartement sous la forme d'un angle entre l'axe de référence et la projection de l'essieu directeur sur le deuxième plan, qui s'étend parallèlement à l'axe transversal du véhicule et perpendiculairement au plan de base normé.

4. Procédé suivant l'une des revendications 2 ou 3,
dans lequel le plan de base normé est parallèle à une surface de fond s'étendant horizontalement.

5. Procédé suivant l'une des revendications 1 à 4,
dans lequel le plan de roue est perpendiculaire à un axe de rotation d'une roue pivotant autour de l'essieu directeur par un braquage et dans lequel l'essieu directeur est perpendiculaire au plan de direction.

6. Procédé suivant la revendication 1,
dans lequel on détecte respectivement 45 à 55 valeurs de mesure du vecteur normal pour les positions de direction différentes.

7. Programme de commande pour déterminer au moins une grandeur caractéristique de châssis d'un véhicule dirigeable, qui peut être chargé dans une mémoire de travail d'un ordinateur et qui a au moins une partie de code, dans l'exécution duquel
- on fait se dérouler une détermination d'un vecteur (602 à 604) normal perpendiculaire à un plan de roue par lequel, pendant un braquage, un arc (607) de cercle autour d'un essieu (601) directeur peut être décrit pour plusieurs positions de braquage différentes,
- on fait se dérouler une détermination d'un plan de direction parallèle à l'arc de cercle autour de l'essieu (601) directeur à l'aide du vecteur (602 à 604) normal déterminé pour plusieurs positions de braquage différentes, un déport de l'essieu (601) directeur pouvant être déduit du plan de direction,
- on fait se dérouler une détermination d'une course (403) sous la forme d'un angle entre une projection (402) de l'essieu (601) directeur sur un premier plan pouvant être prescrit et un axe de référence et/ou un écartement (503) sous la forme d'un angle entre une projection (502) de l'essieu (601) directeur sur un deuxième plan pouvant être prescrit et l'axe de référence, l'axe de référence étant perpendiculaire à un plan de base normé et dans lequel le premier plan est parallèle à un axe longitudinal d'un véhicule et perpendiculaire au plan de base normé et dans lequel le deuxième plan s'étend parallèlement à un axe transversal du véhicule et perpendiculairement au plan de base normé,
- pour la détermination du vecteur (602 à 604) normal des positions de direction différentes, on relève respectivement un nombre pouvant être donné à l'avance de valeurs de mesure du vecteur normal,
- pour respectivement trois valeurs (602 à 604) du vecteur normal sélectionnées par principe aléatoire, on détermine (605, 606) deux vecteurs de différence,
- à partir des vecteurs (605, 606) de différence, on calcule respectivement un produit (608) vectoriel,
- à partir du produit (608) vectoriel, on détermine le plan de direction et/ou l'essieu (601) directeur, le produit (608) vectoriel étant perpendiculaire au plan de direction,
- à partir des produits vectoriels déterminés, on forme une valeur moyenne ou une médiane pour éliminer des erreurs de mesure
lorsque le programme de commande se déroule dans l'ordinateur.
